# EUROPÄISCHE PATENTANMELDUNG

(11) **EP 1 189 298 A1**
(43) Veröffentlichungstag der Anmeldung: **20.03.2002**
(21) Anmeldenummer: 00120469.2
(22) Anmeldetag: 19.09.2000
(51) Int. Cl.: H01M 8/12, H01M 8/06, H01M 8/04, H01M 8/24

(54) **Anlage und Verfahren zum Erzeugen elektrischer Energie**

(71) Anmelder: SIEMENS AKTIENGESELLSCHAFT, 80333 München (DE)
(72) Erfinder: Noelscher, Christoph, Dr., 90419 Nürnberg (DE)

(57) **Zusammenfassung**

Eine Anlage (1,50,80) zum Erzeugen elektrischer Energie ist besonders effizient und somit kostengünstig betreibbar, wenn sie einen Betrieb mit hohem elektrischem Wirkungsgrad erlaubt. Die Erfindung schlägt hierzu eine Anlage (1,50,80) zum Erzeugen elektrischer Energie vor, die ein Hochtemperatur-Brennstoffzellenmodul (5,55,81) mit einem Mittel (27,65,93) zum Erwärmen von Wasserdampf aufweist, diese Mittel (27,65,93) mit der Dampfzuleitung einer Dampfturbine (27,95) verbunden sind und eine Leitung (20,67,99) zur Zuleitung von Entnahmedampf aus der Dampfturbine (27,95) zu einem Reformer vorgesehen ist. Bei einer solchen Anlage wird im Hochtemperatur-Brennstoffzellenmodul (5, 55, 81) erzeugte thermische Energie zum Erhitzen von Wasserdampf verwendet, der, bevor er dem Reformer zugeleitet wird, in einer Dampfturbine (27,95) entspannt wird.

## Beschreibung

Die Erfindung bezieht sich auf eine Anlage und auf ein Verfahren zum Erzeugen elektrischer Energie.

Eine Hochtemperatur-Brennstoffzellenanlage weist einen besonders guten Wirkungsgrad bei der Erzeugung elektrischer Energie auf. Unter einer Hochtemperatur-Brennstoffzelle versteht man eine Brennstoffzelle, deren Elektrolyt ein Festkörperelektrolyt ist (Solid Oxide Fuel Cell, SOFC) oder aus Schmelzkarbonaten besteht (Molten Carbonate Fuel Cell, MCFC). Zum Betreiben einer Hochtemperatur-Brennstoffzellenanlage werden Kohlenwasserstoffhaltige Brennstoffe, beispielsweise Methanol, Erdgas, Heizöl, Naphta oder Biogas verwendet. Diese Brennstoffe müssen in der Regel für den Betrieb der zu Hochtemperatur-Brennstoffzellenmodulen zusammengefassten Hochtemperatur-Brennstoffzellen in geeigneter Weise aufbereitet, d.h. reformiert werden. Die Kohlenwasserstoffhaltigen Brennstoffe durchlaufen dabei vor der elektrochemischen Reaktion in dem Hochtemperatur-Brennstoffzellenmodul einen mit einer Befeuchtung verbundenen Reformierungsprozess, bei dem als gasförmige Reformationsprodukte CO, H₂, CO₂ und H₂O entstehen. Die auch als Reformat bezeichneten gasförmigen Reformationsprodukte bilden nunmehr das geeignete Brenngas für den Betrieb des Hochtemperatur-Brennstoffzellenmoduls.

Der Prozess der Reformierung kann dabei extern oder intern, also außerhalb oder innerhalb des Hochtemperatur-Brennstoffzellenmoduls, mit oder ohne Nutzung von Wärme aus dem Anodenabgas des Hochtemperatur-Brennstoffzellenmoduls erfolgen. Eine interne Reformierung ist beispielsweise aus dem Bericht "Verfahrenstechnik der Hochtemperatur-Brennstoffzelle" von E. Riensche, VDI-Berichte 1174 (1995), Seiten 63 - 78, bekannt, bei der in dem Hochtemperatur-Brennstoffzellenmodul bei der elektrochemischen Verbrennung entstehende Abwärme für die interne Reformierung des Brenngases verwendet wird. Erfolgt die Reformierung zwar innerhalb des Hochtemperatur-Brennstoffzellenmoduls, aber außerhalb eines Anodenteils des Hochtemperatur-Brennstoffzellenmoduls, so wird dies als "indirekte interne Reformierung" bezeichnet. Eine Reformierung im Anodenteil wird dementsprechend auch "direkte interne Reformierung" genannt.

Brennstoffzellenanlagen mit einem oder mehreren Brennstoffzellenmodulen sind so ausgelegt, dass ihr elektrischer Wirkungsgrad möglichst groß ist. Es wird also angestrebt, möglichst viel elektrische Energie pro Menge Brennstoff zu erzeugen. Bei der elektrochemischen Verbrennung von Brenngas in einem Hochtemperatur-Brennstoffzellenmodul entsteht sehr viel Wärme, die es zu nutzen gilt, wenn ein hoher elektrischer Wirkungsgrad erreicht werden soll. Diese thermische Energie kann beispielsweise für die Reformierung des Brennstoffs zu dem Brenngas verwendet werden.

Die US 3,982,962 schlägt eine Anordnung von zwei Hochtemperatur-Brennstoffzellenmodulen in der Weise vor, dass in einem ersten Hochtemperatur-Brennstoffzellenmodul durch direkte interne Reformierung ein Großteil der in diesem Hochtemperatur-Brennstoffzellenmodul entstehenden thermischen Energie verbraucht wird. Das hierdurch erzeugte überschüssige Brenngas wird einem zweiten Hochtemperatur-Brennstoffzellenmodul zugeführt. Die in dem zweiten Modul erzeugte Wärme wird einerseits zur Erhitzung von Wasserdampf eingesetzt, der dem innerhalb des ersten Moduls angeordneten Reformer zugeführt wird. Ein anderer Teil der Wärme aus dem zweiten Modul wird einem Turbolader zugeführt, der das Oxidationsmittel für die beiden Module komprimiert.

In der DE 196 36 738 A1 wird vorgeschlagen, die thermische Energie aus dem zweiten Hochtemperatur-Brennstoffzellenmodul zum Antrieb einer Wärmekraftmaschine zu verwenden, die an einen Generator gekoppelt ist. Auf diese Weise wird die thermische Energie des zweiten Moduls zur Erzeugung von zusätzlicher elektrischer Energie verwendet. Hierdurch wird der elektrische Wirkungsgrad der gesamten Hochtemperatur-Brennstoffzellenanlage erhöht.

Aufgabe der Erfindung ist es, eine Anlage zur Erzeugung elektrischer Energie mit einem verbesserten Wirkungsgrad anzugeben. Außerdem ist es Aufgabe der Erfindung, ein hinsichtlich des Wirkungsgrads verbessertes Verfahren zum Erzeugen elektrischer Energie anzugeben.

Die erstgenannte Aufgabe wird durch eine Anlage zum Erzeugen elektrischer Energie gelöst, die erfindungsgemäß einen Reformer, mindestens ein Hochtemperatur-Brennstoffzellenmodul mit Mitteln zum Erwärmen von Wasser oder Wasserdampf, eine Dampfturbine, deren Dampfzuleitung mit den Mitteln verbunden ist und eine Leitung, die dazu vorgesehen ist, Dampf aus der Dampfturbine mit dessen Energiegehalt dem Reformer zuzuleiten, umfasst.

Eine solche Anlage ist dazu geeignet, die im Hochtemperatur-Brennstoffzellenmodul entstehende thermische Energie zum Verdampfen von Wasser und Erhitzen von Wasserdampf zu verwenden, und den erhitzten Wasserdampf einer Dampfturbine zuzuleiten. Mit einem mit der Dampfturbine verbundenen Generator kann somit aus der Abwärme des Moduls zusätzlich elektrische Energie erzeugt werden. Außerdem kann mit einer solchen Anlage Entnahmedampf aus der Dampfturbine dem Reformer zugeleitet werden. Der Reformer kann entweder im Hochtemperatur-Brennstoffzellenmodul oder außerhalb des Moduls angeordnet sein.

In der Dampfturbine wird ein Teil der thermischen Energie in elektrische Energie umgewandelt und dies mit einem extrem guten Wirkungsgrad, da die Abwärme der Dampfturbine keine Verlustwärme ist sondern dem Reformer zugeleitet wird. Durch die Anordnung der Dampfturbine zwischen dem Hochtemperatur-Brennstoffzellenmodul und dem Reformer wird somit ein Teil der im Modul erzeugten thermischen Energie "abgeschöpft" und in der Dampfturbine in elektrische Energie umgewandelt. Dieser 3-Stufen-Prozess, bei dem in dem Hochtemperatur-Brennstoffzellenmodul elektrische Energie erzeugt wird, mit der Abwärme wiederum elektrische Energie erzeugt wird und die dann noch übrigbleibende Abwärme zum Erzeugen von Brenngas - insbesondere zum Erzeugen von Wasserstoff H₂ - genutzt wird, ist ein sehr effizienter Prozess zur hohen Ausnutzung des Energiegehalts des Brennstoffs.

Bei einer solchen Anlage wird der Vorteil der effizienten Energieausnutzung mit einem weiteren Vorteil kombiniert: Die im Hochtemperatur-Brennstoffzellenmodul entstehende Wärme reicht aus, um große Mengen an Dampf zu erzeugen. Durch die Dampfeinspeisung in den Reformer kann somit eine große Menge von wasserstoffhaltigem Brenngas im Reformer reformiert werden. Der Wasserstoff aus dem Brenngas kann beispielsweise einer Verwendung außerhalb der Anlage zum Erzeugen elektrischer Energie zugeführt werden. Oder das Brenngas wird einer weiteren Nutzung innerhalb des Hochtemperatur-Brennstoffzellenmoduls zugeführt.

Zweckmäßigerweise ist der Reformer innerhalb eines weiteren Hochtemperatur-Brennstoffzellenmoduls angeordnet. Die Anlage umfasst also ein erstes Hochtemperatur-Brennstoffzellenmodul, dass die Mittel zum Erwärmen von Wasser oder Wasserdampf umfasst und ein zweites Hochtemperatur-Brennstoffzellenmodul mit Reformer. Dieses zweite Modul ist beispielsweise kleiner dimensioniert als das erste Modul. Da es durch den Dampf Wärme aus dem ersten Modul zugeführt bekommt, kann es das relativ größere erste Modul vollständig mit Brenngas versorgen.

Bei einer solchen Anlage wird die im ersten Modul erzeugte thermische Energie durch die Dampfturbine und den anschließenden Generator in zusätzliche elektrische Energie umgewandelt. Dies führt zu einem hohen elektrischen Wirkungsgrad. Außerdem kann das zweite Modul im Verhältnis zum ersten Modul klein dimensioniert werden, was zu einer Kostenersparnis bei der Herstellung der Anlage führt.

In einer vorteilhaften Ausgestaltung der Erfindung sind dem Hochtemperatur-Brennstoffzellenmodul anodenabgasseitig ein Brenner und eine Gasturbine nachgeordnet und die Gasturbine und die Dampfturbine sind Bestandteil einer GuD-Anlage. Eine solche Anlage zur Erzeugung elektrischer Energie ist dazu geeignet, auch mit nur einem Hochtemperatur-Brennstoffzellenmodul sehr günstig elektrische Energie zu erzeugen. Wie oben beschrieben, kann durch die Dampfrückführung von der Dampfturbine zum Reformer eine große Menge an Brenngas erzeugt werden. Diese Menge an Brenngas ist beispielsweise so groß, dass das Brenngas im Hochtemperatur-Brennstoffzellenmodul nicht vollständig auf elektrochemische Weise in elektrische Energie umgewandelt wird. Ein Teil des Brenngases durchströmt unverbraucht das Modul. Durchströmt mehr Brenngas die Hochtemperatur-Brennstoffzellen als dort verbraucht wird, so führt das zu einer besonders guten Ausnutzung und somit zu einem guten Wirkungsgrad der Zellen.

In einem dem Modul anodenabgasseitig angeordneten Brenner wird das überschüssige Brenngas verbrannt und mit dem Abgas des Brenners wird eine Gasturbine angetrieben. Das Abgas der Gasturbine wird wiederum zum Aufheizen von Wasserdampf verwendet, dessen thermische Energie durch Entspannung in der Dampfturbine in elektrische Energie umgewandelt wird. Bei dieser Anordnung der Anlage ist das Hochtemperatur-Brennstoffzellenmodul mit einem guten Wirkungsgrad betreibbar. Die nachgeschalteten Turbinen sorgen für zusätzliche elektrische Energie, so dass die drei Komponenten Hochtemperatur-Brennstoffzellenmodul, Gasturbine und Dampfturbine in einer Weise zusammen betrieben werden können, dass jede Komponente optimal ausgelastet ist. Hierdurch ist die Anlage mit einem sehr guten Wirkungsgrad und wirtschaftlich sehr effizient betreibbar.

Die zweitgenannte Aufgabe wird durch ein Verfahren zum Erzeugen elektrischer Energie gelöst, bei dem erfindungsgemäß in einem Reformer aus einem Brennstoff Brenngas reformiert wird, Brenngas in einem Hochtemperatur-Brennstoffzellenmodul in Wärme und elektrische Energie umgewandelt wird, mit einem Teil der Wärme Wasserdampf erwärmt wird, der einer Dampfturbine zugeführt wird und Entnahmedampf der Dampfturbine dem Reformer zugeführt wird.

Der elektrische Wirkungsgrad einer Anlage zum Erzeugen elektrischer Energie ist um so höher, je mehr thermische Energie, die von der Anlage erzeugt wird, in elektrische Energie umgewandelt werden kann. Da elektrische Energie pro Energieinhalt teuerer verkauft werden kann als thermische Energie, führt ein hoher elektrischer Wirkungsgrad der Anlage zu einer kosteneffizienten Nutzung der Anlage. Der elektrische Wirkungsgrad einer Anlage zum Erzeugen elektrischer Energie ist nicht nur von deren Bauart, sondern auch von dem Verfahren abhängig, mit dem sie betrieben wird. Durch das Erwärmen von Wasserdampf mit thermischer Energie aus dem Hochtemperatur-Brennstoffzellenmodul und das Betreiben einer Dampfturbine - mit einem Generator, wird ein Teil der vom Hochtemperatur-Brennstoffzellenmodul erzeugten thermischen Energie in elektrische Energie umgewandelt. Dies führt zu einem guten elektrischen Wirkungsgrad der Anlage.

Üblicherweise wird der Abdampf der Dampfturbine aus thermodynamischen Gründen auskondensiert, wiederum erhitzt und der Dampfturbine erneut zugeführt. Hierbei geht ein Teil der thermischen Energie des Abdampfes verloren. Wird der Dampfturbine Dampf - nach einer gewissen Entspannung - entnommen und dem Reformer zugeführt, so wird der thermische Energiegehalt des Entnahmedampfes im Reformer zur Reformierung des Brenngases eingesetzt. Hierdurch wird ein Abwärmeverlust vermieden, wodurch die Anlage zum Erzeugen elektrischer Energie kostengünstiger betreibbar ist. Außerdem hat dieses Verfahren den Vorteil, dass dem Reformer eine große Menge an Wasserdampf zur Verfügung gestellt wird. Hierdurch kann der Reformer in einem Modus betrieben werden, bei dem sehr viel Reformat erzeugt wird. Ist der Reformer in das Hochtemperatur-Brennstoffzellenmodul integriert und findet die Reformierung im Anodenteil des Hochtemperatur-Brennstoffzellenmoduls statt, so kann das Modul bei diesem Verfahren in der Weise betrieben werden, dass es sehr viel Wärme und sehr viel Strom produziert. Durch die Erzeugung von viel Reformat wird eine hohe Zellausnutzung erreicht. Eine hohe Zellausnutzung führt zu einem hohen Gesamtwirkungsgrad der Brennstoffzelle.

Zweckmäßigerweise wird der Entnahmedampf dem Reformer auf gleichem Druckniveau zugeführt. Hierbei wird beispielsweise die Entnahmestelle in der Dampfturbine so gewählt, dass der Druck des dort entnommenen Dampfes an den Reformer angepasst ist. Dies hat den Vorteil, dass keine Druckminderer für den Entnahmedampf in der Anlage installiert werden müssen.

In einer vorteilhaften Ausgestaltung der Erfindung kann ein Teil des Brenngases in einem Brenner verbrannt und mit dem Abgas des Brenners eine Gasturbine angetrieben werden. Der Energieinhalt des durch thermische Energie erzeugten Brenngases wird somit zu einem Teil in der Gasturbine in elektrische Energie umgewandelt. Beim vorteilhaften Nachschalten einer Dampfturbine hinter die Gasturbine kann ein weiterer Teil des Energieinhaltes des Brenngases für die Stromproduktion durch die Dampfturbine genutzt werden.

Zweckmäßigerweise werden mindestens 40% der im Hochtemperatur-Brennstoffzellenmodul erzeugten Wärme der Dampfturbine zugeführt. Da Wärme aus dem Hochtemperatur-Brennstoffzellenmodul auch dazu genutzt wird, das in das Modul einströmende Brenngas zu erwärmen, wird nur ein Teil der im Modul erzeugten Wärme der Dampfturbine zugeführt. Wird mindestens 40%, insbesondere mehr als 60% der Wärme der Dampfturbine zugeführt, so steht die Dimensionierung von Dampfturbine und Hochtemperatur-Brennstoffzellenmodul in einem günstigen Verhältnis zueinander. Dies führt zu einem hohen elektrischen Wirkungsgrad der Gesamtanlage.

Zweckmäßigerweise wird der Wasserdampf innerhalb des Hochtemperatur-Brennstoffzellenmoduls erwärmt. Bei diesem Verfahren treten geringe Wärmeverluste beim Übertrag der Wärme vom Hochtemperatur-Brennstoffzellenmodul auf den Dampf auf. Vorteilhafterweise ist das Hochtemperatur-Brennstoffzellenmodul so beschaffen, dass für einen Druck des Wasserdampfes von über 100 Bar ausgelegt ist. Hierdurch wird ermöglicht, dass der Wasserdampf im Modul erwärmt wird und mit hohem Druck direkt der Dampfturbine zugeführt wird. Hierdurch treten nur sehr geringe thermische Verluste auf.

In einer weiteren vorteilhaften Ausgestaltung der Erfindung wird der Brennstoff in einem weiteren Hochtemperatur-Brennstoffzellenmodul reformiert und dieses Modul mit einer Zellspannung unterhalb von 0,8 V, insbesondere unterhalb von 0,65 V, betrieben. Beim Betrieb einer Hochtemperatur-Brennstoffzelle bei einer niedrigen Betriebsspannung wird eine hohe Leistungsdichte der Brennstoffzelle erreicht. Bei einem Betrieb der Hochtemperatur-Brennstoffzelle unterhalb von 0,8 V, insbesondere 0,65 V oder darunter, wird außerdem viel Wärme erzeugt. Diese Wärme wird zum Betrieb der Dampfturbine und somit zur Stromerzeugung und auch zur Reformierung des Brenngases genutzt.

Mit Vorteil erzeugt der Reformer mehr Reformat, insbesondere Wasserstoff als in den Hochtemperatur-Brennstoffzellenmodulen verbraucht wird. Bei dieser Ausgestaltung des Verfahrens können die Hochtemperatur-Brennstoffzellen mit einem Überschuss an Wasserstoff betrieben werden, was zu einer guten Ausnutzung der Zellen führt. Die Zellen erreichen hierdurch einen hohen elektrischen Wirkungsgrad. Außerdem kann der überschüssige Wasserstoff abgetrennt und einem Verbraucher außerhalb der Anlage zum Erzeugen elektrischer Energie zur Verfügung gestellt werden. Da Wasserstoff in der Industrie in steigendem Maße gebraucht wird, kann durch diese Verfahrensweise eine zusätzliche Einnahmequelle für den Betreiber der Anlage zum Erzeugen elektrischer Energie erschlossen werden. Hierdurch ist die Anlage besonders kostengünstig betreibbar.

Ausführungsbeispiele der Erfindung werden in drei Figuren näher erläutert. Es zeigen:
- FIG 1: eine Anlage zum Erzeugen elektrischer Energie in schematischer Darstellung mit zwei Hochtemperatur-Brennstoffzellenmodulen,
- FIG 2: eine vereinfachte Anlage zum Erzeugen elektrischer Energie und
- FIG 3: eine Anlage zum Erzeugen elektrischer Energie mit nur einem Hochtemperatur-Brennstoffzellenmodul.

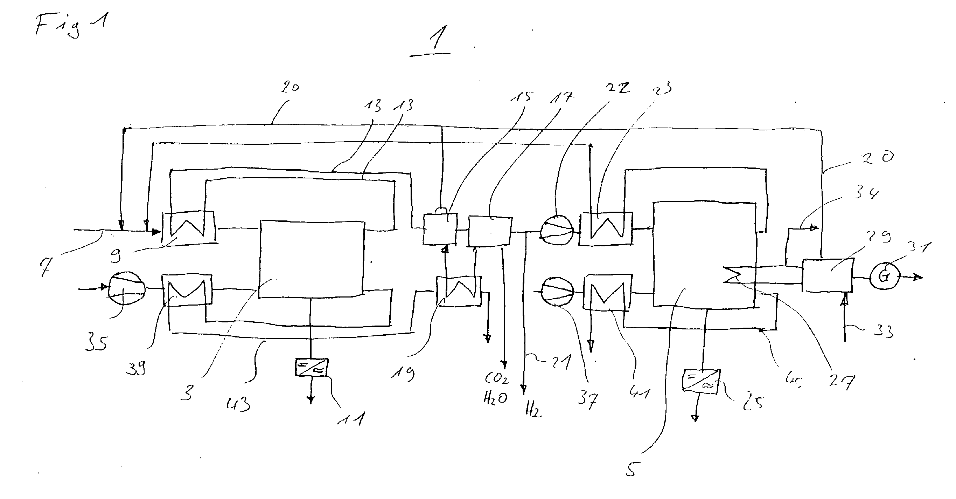

In Figur 1 wird in schematischer Darstellung eine Anlage 1 zum Erzeugen elektrischer Energie gezeigt, die ein erstes Hochtemperatur-Brennstoffzellenmodul 3 und ein zweites Hochtemperatur-Brennstoffzellenmodul 5 umfasst. Beim ersten Modul ist der Anodenteil zum Reformieren eines Brennstoffs zu Brenngas ausgelegt. Das zweite Modul 5 weist keine interne Reformierung auf. Die Brennstoffzellen beider Module sind vom Typ SOFC. Bei Betrieb der Anlage wird Erdgas als Brennstoff durch die Leitung 7 einem Wärmetauscher 9 zugeführt. Dort wird der Brennstoff erhitzt und anschließend dem ersten Hochtemperatur-Brennstoffzellenmodul 3 zugeführt. In diesem Modul 3 wird der Brennstoff in ein Brenngas reformiert und ein Teil des Brenngases wird im Modul 3 durch elektrochemische Reaktion in elektrische Energie und Wärme umgewandelt. Ein Teil Wärme wird im Modul 3 dem internen Reformierungsprozess zugeführt, der Reformierungsprozess kühlt also das Modul 3. Die elektrische Energie wird einem Stromrichter 11 zugeführt, der Anschluss an ein Stromnetz hat.

Das Abgas des Moduls 3 weist einen hohen Brenngas- und Wärmeinhalt auf. Es wird durch die Leitung 13 dem Wärmetauscher 9 zugeführt, wo es Wärme an den Brennstoff abgibt. Im weiteren Verlauf wird das Abgas durch die Leitung 13 durch einen Verdampfer 15 und weiter in eine Gaswaschanlage 17 geführt. Dort wird CO₂ aus dem Abgas abgetrennt und abgeführt und es wird auch Wasser abgetrennt, das in einem Wärmetauscher 19 und im Verdampfer 15 erhitzt wird, um durch die Leitung 20 dem Brennstoff zugeführt und mit diesem vermischt zu werden.

Das die Gaswaschanlage verlassende Anodenabgas ist nun ein stark wasserstoffhaltiges Gas. Ein Teil des Wasserstoffs (H₂) aus dem Anodenabgas wird durch die Leitung 21 zur Verwendung außerhalb der Anlage 1 zum Erzeugen elektrischer Energie abgeführt. Der Rest des Anodenabgases wird durch einen Verdichter 22 und anschließend durch einen Wärmetauscher 23 geführt, wo es erhitzt und anschließend dem zweiten Hochtemperatur-Brennstoffzellenmodul 5 zugeführt wird. In diesem zweiten Modul wird ein Teil des Wasserstoffs aus dem gereinigten Anodenabgas des ersten Moduls durch elektrochemische Reaktion in elektrische Energie überführt, die einem Stromrichter 25 und weiter einem Stromnetz zugeführt wird. Da auch die Brennstoffzellen des zweiten Moduls 5 im Wasserstoff-Überschuss betrieben werden, um eine gute Zellausnutzung zu erreichen, wird das Anodenabgas des zweiten Moduls 5 über den Wärmetauscher 23 in die Leitung 7 eingespeist und somit einem Kreislauf zugeführt.

Das zweite Hochtemperatur-Brennstoffzellenmodul 5 weist Mittel 27 auf, in der mit der Wärme aus dem Modul 5 Wasserdampf erzeugt und erhitzt wird. Diese Mittel 27 sind eine druckbeständige und für einen Druck des Wasserdampfs bis 100 bar ausgelegte Vorrichtung, beispielsweise ein Verdampfer oder Wärmetauscher. Der unter Druck stehende Wasserdampf wird einer Dampfturbine 29 zugeführt, die die thermische Energie aus dem Modul 5 in mechanische Energie umwandelt. Ein nachgeschalteter Generator 31 wandelt die mechanische Energie in elektrische Energie um. Ein Teil des Dampfes aus der Dampfturbine 29 wird über die Leitung 20 der Leitung 7 zugeführt. Von dort gelangt der Dampf in das erste Modul 3, wo es zur Reformierung des Brenngases eingesetzt wird. Nicht bei der Reformierung verbrauchter Dampf läuft im stationären Betrieb im Kreislauf, ohne zu kondensieren. Das der Dampfturbine 29 mit dem Entnahmedampf entzogene Wasser wird durch die Zuführung von neuem Wasser durch die Leitung 33 ersetzt. Durch die Leitung 34 kann in der Vorrichtung 27 erhitzter Wasserdampf auch direkt der Leitung 20 und Leitung 7 zugeführt werden. Eine solche Führung des Dampfs ist beispielsweise beim Anfahren der Anlage 1 sinnvoll.

Die Oxidationsmittelzufuhr für die beiden Module 3 und 5 gestaltet sich jeweils sehr ähnlich. Durch einen Verdichter 35, 37 wird Luft eingesaugt, jeweils einem Wärmetauscher 39, 41 zur Erhitzung zugeführt, und dann dem jeweiligen Modul 3, 5 auf der Kathodenseite eingespeist. In den Modulen 3, 5 reagiert das Oxidationsmittel auf elektrochemische Weise mit dem Brenngas, wodurch Wärme und elektrische Energie erzeugt wird. Das Kathodenabgas aus den Modulen 3 und 5 wird durch die Leitungen 43 bzw. 45 den Wärmetauschern 39 bzw. 41 zugeführt. Das Kathodenabgas des Moduls 3 wird zusätzlich durch den Wärmetauscher 19 durchgeführt. Anschließend verlassen die Kathodenabgase die Anlage 1 als Abluft.

Die Hochtemperatur-Brennstoffzellen, des Moduls 3 werden bei einer Zellspannung unterhalb von 0,65 V betrieben. Hierdurch wird im Modul 3 viel Wärme und mit der Wärme mehr Wasserstoff (H₂) erzeugt, als in den Modulen 3 und 5 verbraucht wird. Mehr als 25% des im Modul 3 erzeugten Wasserstoffs wird aus der Anlage 1 heraus- und einer Nutzung außerhalb der Anlage zugeführt. Die thermische Energie des Moduls 5 wird zu einem Teil in den Wärmetauschern 23 und 41 dem Brenngas für das Modul 5 zugeführt. Mehr als 60% der im Modul 5 erzeugten thermischen Energie wird jedoch der Dampfturbine 29 zugeleitet und somit zur Stromproduktion im Generator 31 verwendet. Über 10% des die Dampfturbine 29 durchströmenden Dampfes, insbesondere über 25% und im Extremfall sogar über 50%, werden der Dampfturbine 29 entnommen über die Leitung 20 dem Brennstoff in der Leitung 7 auf gleichem Druckniveau zugeführt. Durch dieses Verfahren wird dem Reformer im Modul 3 genügend Dampf für die Überschussproduktion an Wasserstoff zur Verfügung gestellt.

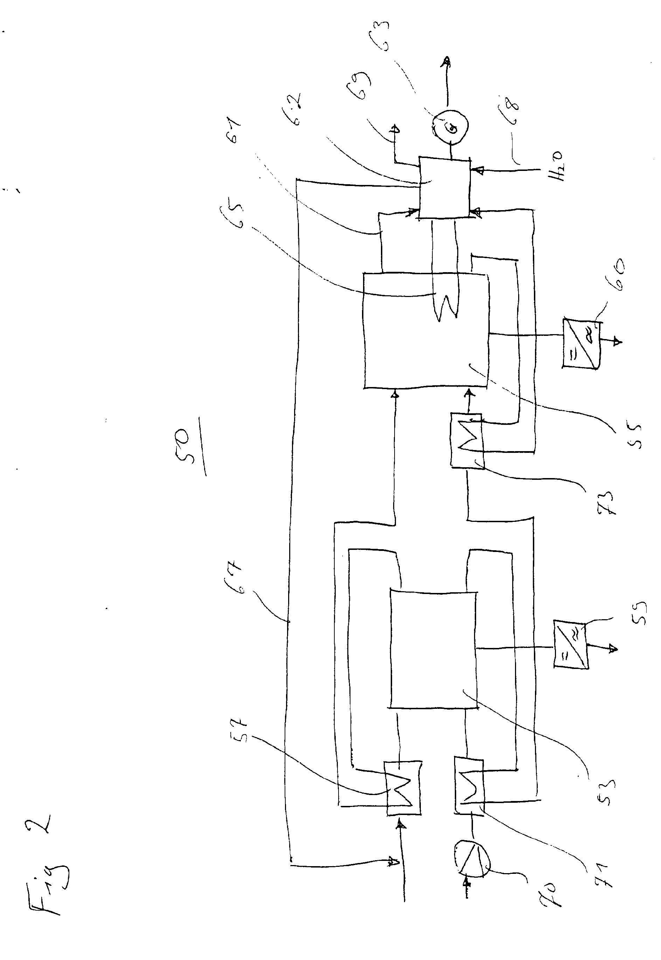

Figur 2 zeigt in schematischer Darstellung eine Anlage 50 zum Erzeugen von elektrischer Energie, die gegenüber der Anlage 1 aus Figur 1 in einfacherer Ausführung konstruiert ist. Die Anlage 50 umfasst ein Hochtemperatur-Brennstoffzellenmodul 53 des Typs SOFC mit interner anodengasseitiger Reformierung und ein zweites Hochtemperatur-Brennstoffzellenmodul 55, das auch vom Typ SOFC ist. Dem Modul 53 wird als Brennstoff Erdgas zugeführt. Der Brennstoff wird im Wärmetauscher 57 erhitzt, anschließend dem Modul 53 zugeführt, dort zu Brenngas reformiert und mit dem Brenngas wird Strom erzeugt, der dem Stromrichter 59 zugeführt wird. Das Anodenabgas wird durch den Wärmetauscher 57 und anschließend in das Modul 55 geführt. Der dort erzeugte elektrische Strom wird dem Stromrichter 60 zugeführt. Das Anodenabgas des Moduls 55 wird durch die Leitung 61 einer GuD-Anlage 62 zugeführt, die einen Brenner umfasst, in dem das Anodenabgas verbrannt wird, sowie eine nicht näher dargestellte Gasturbine, die mit dem Brennerabgas betrieben wird und zur Erzeugung von elektrischer Energie mit Hilfe des nachgeschalteten Generators 63 vorgesehen ist. In der GuD-Anlage 62 ist auch eine nicht näher dargestellte Dampfturbine angeordnet, die mit Mitteln 65 verbunden ist, die zum Erwärmen von Wasser oder Wasserdampf innerhalb des Moduls 55 vorgesehen sind. Mit dem somit erzeugten Wasserdampf wird die Dampfturbine betrieben, die in Zusammenarbeit mit dem Generator 63 Strom erzeugt. Ein Teil des Dampfes aus der Dampfturbine wird über die Leitung 67 der Brennstoffzufuhr und somit dem Modul 53 auf gleichem Druckniveau zugeleitet. Das somit entzogene Wasser wird durch Frischwasser ersetzt, das durch die Leitung 68 der GuD-Anlage 62 zugeführt wird. Das Abgas aus der GuD-Anlage 62 wird durch die Leitung 69 abgeführt. Das Modul 53 wird in einem Betriebsmodus betrieben, der es erlaubt, mehr Betriebsgase zu erzeugen, als in den Modulen 53 und 55 verbraucht wird.

Die Oxidationsmittelzufuhr der Module 53 und 55 geschieht durch einen Verdichter 70, durch den Zuluft zuerst durch den Wärmetauscher 71 und dann dem Modul 53 zugeführt wird. Das Kathodenabgas des Moduls 53 wird wiederum durch den Wärmetauscher 71 zum Aufheizen der Zuluft durchgeleitet, wird anschließend selber im Wärmetauscher 73 aufgeheizt und danach dem Modul 55 zugeleitet. Das Kathodenabgas des Moduls 55 wird wiederum durch den Wärmetauscher 73 und anschließend in die GuD-Anlage 62 geleitet. Dort wird es dem Brenner zugeführt. Die Module 53, 55 und die GuD-Anlage 62 sind in ihrer Dimensionierung so aufeinander abgestimmt, dass sie im Zusammenspiel mit sehr guter Auslastung betrieben werden können. Durch die effiziente Nutzung der in den Modulen 53 und 55 erzeugten thermischen Energie zur Erzeugung von elektrischer Energie ist die Anlage 50 mit gutem Wirkungsgrad und sehr kosteneffizient betreibbar.

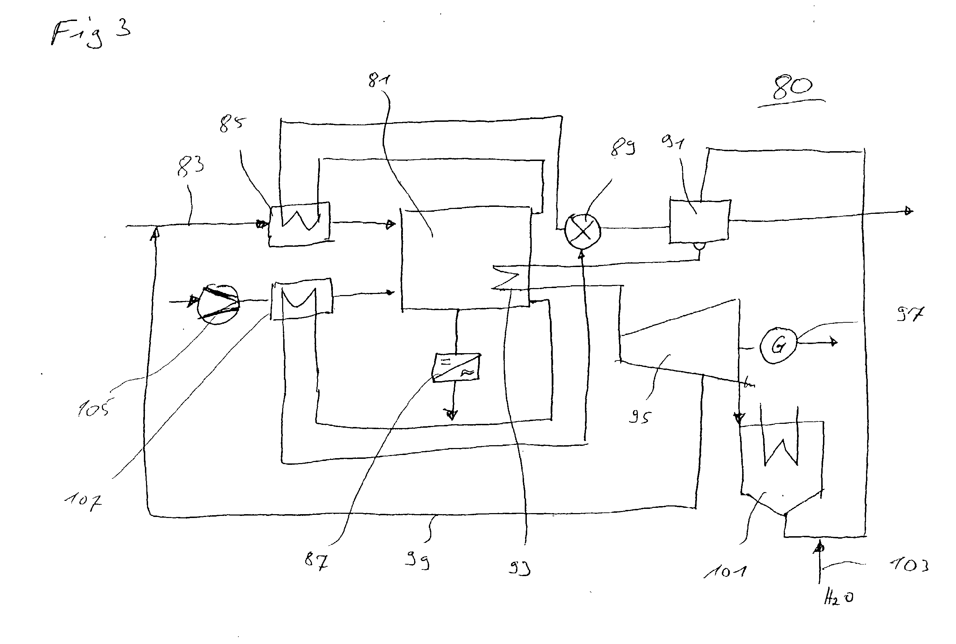

Figur 3 zeigt eine Anlage 80 zum Erzeugen elektrischer Energie mit nur einem Hochtemperatur-Brennstoffzellenmodul 81 mit interner Reformierung. Das Modul 81 ist zur Reformierung von Methanol ausgelegt, das durch die Leitung 83 einem Wärmetauscher 85, in dem es erhitzt wird, und anschließend dem Modul 81 zugeführt wird. Im Modul 81 wird das Methanol zum Brenngas reformiert und damit Strom erzeugt, der einem Stromrichter 87 zugeführt wird. Das Anodenabgas wird nach Wärmeabgabe im Wärmetauscher 85 in einem Brenner 89 nachverbrannt und anschließend einem Verdampfer 91 zugeführt, in dem mit der thermischen Energie des nachverbrannten Anodenabgases Wasser verdampft wird. Anschließend wird das Abgas aus der Anlage herausgeführt. Das in dem Verdampfer 91 verdampfte Wasser wird im Modul 81 in dessen Mitteln 93 zum Erhitzen von Wasserdampf nacherhitzt und anschließend einer Dampfturbine 95 zugeführt. Die Dampfturbine 95 erzeugt mit dem an sie anschließenden Generator 97 Strom. Ein Teil des Entnahmedampfes aus der Dampfturbine 95 wird über die Leitung 99 in die Leitung 83 geführt und somit mit dem Brennstoff gemischt. Er gelangt somit in den Reformer des Moduls 81. Ein anderer Teil des Dampfes wird in der Dampfturbine weiter entspannt, in einem Kondensator 101 auskondensiert und anschließend dem Verdampfer 91 wieder zugeführt. Zum Ausgleich des von der Dampfturbine 95 an den Reformer abgegebenen Entnahmedampfes wird durch die Leitung 103 in den Dampfkreislauf der Dampfturbine 95 frisches Wasser eingespeist, das im Verdampfer 91 erhitzt wird.

Kathodenseitig wird dem Modul 81 durch den Verdichter 105 verdichtete Luft zugeführt, die zuvor im Wärmetauscher 107 erwärmt wurde. Das Kathodenabgas wird zuerst dem Wärmetauscher 107 und anschließend dem Brenner 89 zugeführt.

## Patentansprüche

1. Anlage (1,50,80) zum Erzeugen elektrischer Energie mit einem Reformer, mindestens einem Hochtemperatur-Brennstoffzellenmodul (5,55,81), das Mittel (27,65,93) zum Erwärmen von Wasser oder Wasserdampf aufweist, einer Dampfturbine (29,95), deren Dampfzuleitung mit den Mitteln (27,65,93) verbunden ist, und einer Leitung (20,67,99), die dazu vorgesehen ist, Dampf aus der Dampfturbine (29,95) mit dessen Energiegehalt dem Reformer zuzuleiten.

2. Anlage (1,50) nach Anspruch 1,
**dadurch gekennzeichnet, dass** der Reformer innerhalb eines weiteren Hochtemperatur-Brennstoffzellenmoduls (3,53) angeordnet ist.

3. Anlage (50) nach Anspruch 1 oder 2,
**dadurch gekennzeichnet, dass** dem Hochtemperatur-Brennstoffzellenmodul (55) anodenabgasseitig ein Brenner und eine Gasturbine nachgeordnet sind und die Gas- und die Dampfturbine Bestandteil einer GuD-Anlage (62) sind.

4. Verfahren zum Erzeugen elektrischer Energie, bei dem
a) in einem Reformer aus einem Brennstoff Brenngas reformiert wird,
b) Brenngas in einem Hochtemperatur-Brennstoffzellenmodul (5,55,81) in Wärme und elektrische Energie umgewandelt wird,
c) mit einem Teil der Wärme Wasserdampf erwärmt wird, der einer Dampfturbine (29,95) zugeführt wird und
d) Entnahmedampf der Dampfturbine (29,95) dem Reformer zugeführt wird.

5. Verfahren nach Anspruch 4,
**dadurch gekennzeichnet, dass** ein Teil des Brenngases in einem Brenner verbrannt und mit dem Abgas des Brenners eine Gasturbine angetrieben wird.

6. Verfahren nach Anspruch 4 oder 5,
**dadurch gekennzeichnet, dass** mindestens 40% der im Hochtemperatur-Brennstoffzellenmodul (5,81) erzeugten Wärme der Dampfturbine (29,95) zugeführt wird.

7. Verfahren nach einem der Ansprüche 4 bis 6,
**dadurch gekennzeichnet, dass** der Wasserdampf innerhalb des Hochtemperatur-Brennstoffzellenmoduls (5,55,81) erwärmt wird.

8. Verfahren nach einem der Ansprüche 4 bis 7,
**dadurch gekennzeichnet, dass** der Brennstoff in einem weiteren Hochtemperatur-Brennstoffzellenmodul (3,53) reformiert und dieses Hochtemperatur-Brennstoffzellenmodul (3,53) mit einer Zellspannung unterhalb 0,8 V, insbesondere unterhalb 0,65 V, betrieben wird.

9. Verfahren nach einem der Ansprüche 4 bis 8,
**dadurch gekennzeichnet, dass** der Reformer mehr Wasserstoff erzeugt als in den Hochtemperatur-Brennstoffzellenmodulen (3,5,53,55,81) verbraucht wird.
